# EUROPEAN PATENT APPLICATION

(11) **EP 2 048 883 A1**
(43) Date of publication of application: **15.04.2009**
(21) Application number: 07791149.3
(22) Date of filing: 23.07.2007
(51) Int. Cl.: H04N 7/173, H04N 5/44

(54) **DISPLAY DEVICE AND DISPLAY SYSTEM**

(30) Priority: 28.07.2006 JP 2006206147; 19.07.2007 JP 2007188252
(71) Applicant: Sharp Kabushiki Kaisha, Osaka-shi, Osaka 545-8522 (JP)
(72) Inventor: YOSHIDA, Tatsuya, Tochigi 329-1232 (JP)
(74) Representative: Brown, Kenneth Richard
(86) International application number: PCT/JP2007/064416
(87) International publication number: WO 2008/013133

(57) **Abstract**

A display apparatus is provided that is capable of selecting an external device to which a CEC message is transmitted according to a user's operation to switch input as a device for operation, even when the device is not in an active state. A television apparatus 100 includes an HDMI terminal connected to an external device and is connected hierarchically in a tree structure to a plurality of external devices through the HDMI terminal. When input switching is instructed to any of the plurality of external devices according to a user's operation to switch input, the television apparatus 100 transmits a CEC message of <Set Stream Path> for switching an input route to the external device to which the instruction of input switching has been given and selects an external device to be a transmission destination of the CEC message of <Set Stream Path> as a device for operation.

## Description

### TECHNICAL FIELD

The present invention relates to a display apparatus and a display system, more specifically, to a display apparatus capable of being connected to an output apparatus (external device) such as a DVD recording apparatus through a digital interface such as an HDMI (High Definition Multimedia Interface) and a display system including the apparatus.

### BACKGROUND OF THE INVENTION

HDMIs have come into wide use as a digital interface for transmission of video/audio. The HDMI is arranged for AV devices by adding an audio transmission function and a copyright protection function to DVI which is a connection standard for a PC and a display.
Conventionally, a plurality of cables for each signal of video/audio/control have been used for the connection between devices, however, since the HDMI needs only one cable and control signals correspond to bidirectional transmission, it has also been possible to operate the entire AV system such as a home theater with one remote controller by relaying the control signal to an output apparatus such as an STB (Set Top Box) and a DVD player connected by the HDMI from a monitor.

The basic specification for the standard of the HDMI was established in December 2002 by the standardization organization of HDMI Licensing, LLC (HDMI standard Ver1.0), and a rule for CEC (Consumer Electronics Control) was added as a control protocol for performing control between AV devices in December 2005 (HDMI standard Ver1.2a, refer to Non-Patent Literature 1). After that, although some revisions have been made, description of the CEC will hereinafter be based on the standard after the HDMI standard Ver1.2a and be referred to as the HDMI standard unless otherwise noted.

Note that, terms about the CEC are defined in "2.2 Glossary of Terms" of the HDMI standard, "CEC 2.2 Glossary of Terms" and the like, where one that has an HDMI input terminal is defined as a sink device, one that has an HDMI output terminal and outputs an AV stream is defined as a source device, and one that has an HDMI input terminal and output terminal and inputs/outputs an AV stream is defined as a repeater device.

In the HDMI standard, control between devices using the CEC is defined. According to the CEC, various kinds of controls are possible based on specific physical address and logical address assigned to each device existing on an HDMI network. For example, when reproduction is made by a DVD player connected by the HDMI while a user views digital broadcast on a television, the television automatically switches to the input where the DVD player is connected. Moreover, menu operation displayed by the DVD player, on/off of a power source and the like can be operated using a remote controller of the television.

In addition, the HDMI standard prescribes that a maximum of 10 devices including televisions can be connected to work effectively, thus it is possible to connect a maximum of nine external devices to one television. When one external device is connected to the television, it is clear that which device is operated from a remote controller, however, when a plurality of external devices are connected, there is a problem that it is hard to recognize which device is operated from the television using a remote controller of the television.

Hence, it is considered that, when performing operation of an external device from the television using the remote controller of the television as described above, by selecting a device actually displaying video on the television as a device for operation, the device for operation is limited from a plurality of devices. In the HDMI standard, <Active Source> is prescribed as a CEC message for clearly indicating such a device displaying video on the television. According to this prescription, for example, when a user operates a reproduction button of a DVD player complying with the HDMI standard, the DVD player outputs an AV stream as well as broadcasts <Active Source> indicative of being an active device if the DVD player itself is in a state capable of outputting stable video signal (that is, in an active state). Here, the "broadcast" means to simultaneously transmit a signal not to a specific device but to all devices. The television and other external devices to which <Active Source> has been broadcasted switch a route for reproducing the AV stream output from the DVD player. In this way, it is prescribed that in external devices, a device displaying video on TV broadcasts <Active Source> to other devices in a network. Note that, <Active Source> is one of CEC messages defined in the HDMI standard.
[Non-Patent Document 1] High-Definition Multimedia Interface Specification Version 1.2a Supplement 1 Consumer Electronics Control (CEC), December 14 2005

### DISCLOSURE OF THE INVENTION

### PROBLEMS TO BE SOLVED BY THE INVENTION

However, a method in which an "active device" which has broadcasted <Active Source> serves as a device for operation has the following problem. HDMI standard prescribes that it is optional to comply with the CEC, however, since CEC has prescriptions that must be essentially complied with and are optionally complied with the following disadvantage arises.
Assumed is a state where a television includes a plurality of HDMI input terminals, and each of the HDMI input terminals is connected to, for example, a device A and a device B that are devices complying with the HDMI standard. First, it is assumed that a user operates a reproduction button of the device A intending to operate the device A connected to the television. In this case, since the device A is an operable device, the device A broadcasts <Active Source> as described above. That is, at this time, the television and other external devices having received this are notified that the device A is an "active device". In this example, description has been given assuming a case where the user operates the reproduction button of the device A, but the device A may broadcast <Active Source> when the user performs reproducing operation by a remote controller of the device A or performs input switching operation of the television. That is, the device A may comply with not only the essential prescriptions but the optional prescriptions of the HDMI standard.

Next, it is assumed that the user performs input switching operation of the television intending to operate the device B and selects the input to which the device B is connected. However, there is a case where the device B does not broadcast <Active Source>, and in such a case, the device A remains as an "active device". Thus, even when the user performs some operation to the device B, operation signal thereof is transmitted to the device A as the "active device". Such disadvantage is caused by the fact that the device B does not comply with the optional prescriptions of the HDMI standard.

Although a user gives an instruction for switching to a device that the user wants it as a device for displaying video, and operation, when the device is not an "active device", the television does not recognize it as a device for operation, thus it is impossible to operate the device from the television. That is, HDMI standard is intended to connect a plurality of external devices, but does not provide a means to use one device specified among a plurality of external devices. Furthermore, there are many optional prescriptions in the HDMI standard, various troubles arise when external devices of different companies are used or different versions of external devices are mixed at the same time.

The present invention has been made in view of the above-mentioned circumstances, and an object is to provide a display apparatus that is capable of selecting the device to which the CEC message has been transmitted as the device for operation, in a case where a CEC message is transmitted to an external device in response to a user' s operation to switch input, even when the device is not in an active state, and a display system including the display apparatus.

### MEANS FOR SOLVING THE PROBLEMS

In order to solve the above problem, a first technical means of the present invention is a display apparatus including an HDMI terminal connected to an external device, through which a plurality of external devices are connected to the display apparatus hierarchically in a tree structure, wherein when an instruction to switch input is given to any of the plurality of external devices through a user' s operation to switch input, a CEC message for switching an input route to the external device to which the instruction to switch input has been given is transmitted, and the external device to be a transmission destination of the CEC message is selected as a device for operation.

A second technical means is the display apparatus as defined in the first technical means, wherein when a notification that the external device selects an external device at a next layer is given from the external device having received the CEC massage, upon reception of the notification, the CEC message is transmitted to the external device at the next layer.

A third technical means is the display apparatus as defined in the second technical means, wherein when the notification is not given from the external device having received the CEC massage, the external device having received the CEC massage is selected as a device for operation.

A fourth technical means is the display apparatus as defined in any one of the first through the third technical means, comprising storage means for storing address information of the external device selected as a device for operation, wherein when switching input next time, an address of the external device is specified to transmit the CEC message.

A fifth technical means is the display apparatus as defined in any one of the first through the fourth technical means, wherein the CEC message is <Set Stream Path> defined in the HDMI standard.

A sixth technical means is a display system, comprising: the display apparatus as defined in any one of the first through the fifth technical means; and a plurality of external devices connected directly to or indirectly through an HDMI terminal of another external device to the HDMI terminal of the display apparatus.

### EFFECT OF THE INVENTION

According to the present invention, in a case where a CEC message is transmitted to an external device in response to a user' s operation to switch input, even when the device is not in an active state, it is possible to select the device to which the CEC message has been transmitted as an operation object device, and therefore it is possible for the user to easily select the device for operation just by switching input.
Furthermore, a user does not need to be particularly conscious of a transmission destination of a CEC message, thus making it possible for the user to perform an operation of a connected device smoothly.
Furthermore, presently, the HDMI standard has many optional prescriptions and each company takes different measures for these proscriptions, however, an external device complying with essential prescriptions of the HDMI standard can select a device not complying with optional descriptions as a device for operation and operate the device.

### BRIEF DESCRIPTION OF THE DRAWINGS

Fig. 1 is a block diagram illustrating a structural example of important parts according to HDMI connection in a display system of the present invention;
Fig. 2 is a block diagram showing a structural example of a display apparatus according to an embodiment of the present invention;
Fig. 3 is a view illustrating an example of a method for selecting an operation object device by the display system of the present invention;
Fig. 4 is a flowchart illustrating an example of a method for selecting a device for operation by the display system of the present invention; and
Fig. 5 is a flowchart illustrating another example of a method for selecting a device for operation by the display system of the present invention.

### EXPLANATIONS OF REFERENCE NUMERALS

10...source device, 10a, 10e...recorder, 10b...DVD player, 10c, 10d...STB, 11...HDMI transmitter, 12...HOST CPU, 13...front microcomputer, 14...CEC I/F, 20...repeater device, 20a, 20b, 20c...AV amplifier, 21...HDMI receiver, 22...HDMI transmitter, 23...HOST CPU, 24...front microcomputer, 25...CEC I/F, 30...sink device, 31...HOST CPU, 32...front microcomputer, 33...CEC I/F, 34...memory, 35...light receiving portion, 36...remote controller, 41...TMDS line, 42...CEC line, 100...television apparatus, 101...TV tuner, 102...demultiplexer, 103...decoder, 104...system control portion, 105...bus control portion, 106, 107...external input terminal, 108, 109...HDMI terminal, 110...image processing portion, 111...device driving portion, 112...frame memory, 113...display device, 114...infrared ray receiving portion, 115...memory, 116...audio processing portion, 117...speaker

### PREFERRED EMBODIMENTS OF THE INVENTION

Preferred embodiments according to a display apparatus and a display system including the apparatus of the present invention will hereinafter be described with reference to the accompanying drawings.
In each embodiment of the present invention, a CEC message included in the HDMI standard is used. The CEC message is device control signal standardized by the HDMI.

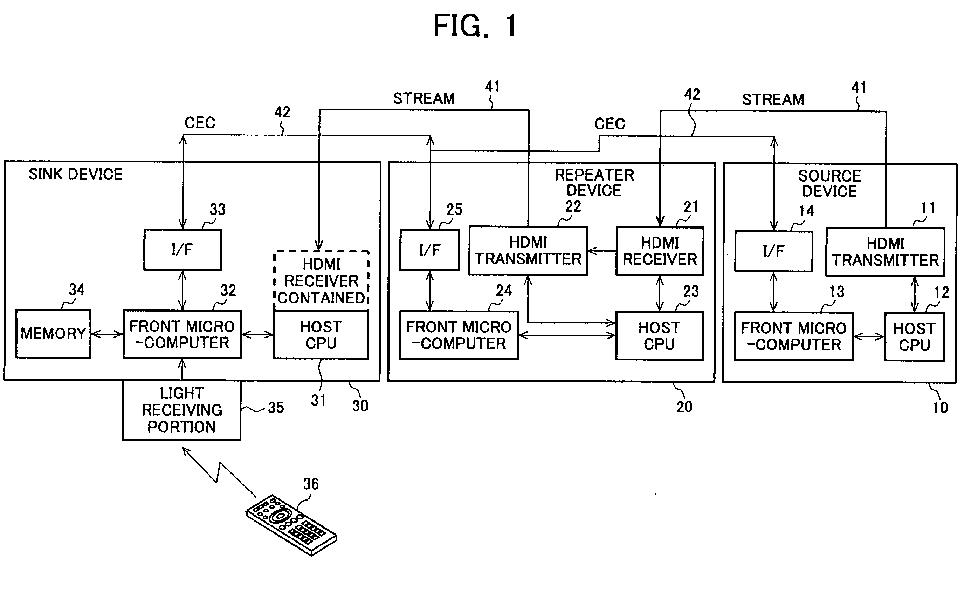

Fig. 1 is a block diagram illustrating a structural example of important parts according to HDMI connection in the display system of the present invention, which shows the structure which a source device 10, a repeater device 20 and a sink device 30 are connected through an HDMI cable. Note that, the source device 10 is, for example, such as a DVD recorder, an HDD recorder, a DVD player, a digital system VTR, and a digital video camera, each of which has an HDMI output terminal. The repeater device 20 such as an AV amplifier, a recorder, and a player, each of which has HDMI input terminal and output terminal.
The sink device 30 is a display apparatus including a liquid crystal television and a monitor, each of which has an HDMI input terminal. When the repeater device 20 such as an AV amplifier has a plurality of HDMI input terminals, a plurality of the source devices 10 can be connected to the repeater device 20 and an input line can be switched using a selector function of the AV amplifier.

The sink device 30 according to the present invention detects operation states of the repeater device 20 and the source device 10, and uses a CEC message transferred through a CEC line 42 to control the operation states of the repeater device 20 and the source device 10. As has been described above, the CEC message is device control signal based on a CEC protocol of the HDMI standard. In addition, by exchanging the device control signal between devices, various operation controls are realized between the sink device 30 and a connected device.

Note that, the HDMI cable includes a TMDS (Transition Minimized Differential Signaling) line (digital signal line) 41 for transmitting video/audio signal as digital signal in a differential method and the CEC line 42 which is a bidirectional bus for transmitting common control signal (CEC message) between devices. In addition, the HDMI cable includes a DDC (Display Data Channel) line (not shown) which is used for transmission of EDID (Extended Display Identification Data), authentication of HDCP (High-bandwidth Digital Content Protection system) and the like.

Description will hereinafter be given for important parts with respect to HDMI connection of the source device 10, the repeater device 20, and the sink device 30.
The source device 10 includes an HDMI transmitter 11, a HOST CPU 12, a front microcomputer 13, and a CEC I/F 14. The HDMI transmitter 11 reads video data and audio data recorded in a medium such as a DVD, for example, to convert them into an AV stream in an HDMI format which audio signal is inserted in a blanking period of video signal. Then, the converted AV stream is transferred to the repeater device 20 by the TMDS line 41. The HOST CPU 12 includes an HDMI controller and controls an operation of the HDMI transmitter 11.

The CEC I/F 14 is connected to the CEC line 42 in the HDMI cable and allows bidirectional communication of a CEC message with the repeater device 20. The CEC I/F 14 is controlled by the front microcomputer 13 including a CEC controller so that HDMI-connected devices can be controlled using the CEC message. In the case of the CEC, logical address (type of device) and physical address (position of device) of each HDMI-connected device are obtained, and therefore it is possible to transmit the CEC message to a desired device by specifying the physical address.

The HOST CPU 12 controls the entire apparatus. Moreover, the front microcomputer 13 operates in low electric power and always monitors a CEC message transferred from the CEC line 42. In addition, when there is a remote controller, the presence/absence of transmission of remote controller signal is monitored by the front microcomputer 13. Moreover, even when the operation of the HOST CPU 12 is stopped because of a stand-by mode of the apparatus and the like, the front microcomputer 13 operates (operates in a state capable of at least transferring a CEC message).

The repeater device 20 includes an HDMI receiver 21, an HDMI transmitter 22, a HOST CPU 23, a front microcomputer 24, and a CEC I/F 25. The repeater device 20 receives an AV stream transferred from the source device 10 at the HDMI receiver 21 and further transmits the AV stream to the sink device 30 from the HDMI transmitter 22. In addition, the CEC line 42 between the repeater device 20 and the source device 10 and the CEC line 42 between the repeater device 20 and the sink device 30 are connected by the CEC I/F 25.

The HOST CPU 23 and the front microcomputer 24 have the similar function to that of the above-mentioned source device 10, and the HOST CPU 23 controls the HDMI receiver 21 and the HDMI transmitter 22 as well as controls the entire apparatus. In addition, the front microcomputer 24 includes a CEC controller for monitoring a CEC message transferred from the CEC line 42.

The sink device 30 includes a HOST CPU 31 containing an HDMI receiver, a front microcomputer 32, a CEC I/F 33, a memory 34, and a light receiving portion 35. The sink device 30 receives the AV stream transferred by the repeater device 20 at the HOST CPU 31 containing the HDMI receiver. The HDMI receiver may be separated from the HOST CPU 31. In addition, with the CEC I/F 33, the CEC line 42 between the sink device 30 and the repeater device 20 is connected. A control program of the sink device 30 and the like are stored in the memory 34. In addition, the memory 34 stores physical addresses of the repeater device 20 and the source device 10 that are HDMI-connected to the sink device 30 based on the HDMI standard.

The HOST CPU 31 contains the HDMI receiver and controls the entire apparatus. Moreover, the front microcomputer 32 includes a CEC controller and monitors a CEC message transferred from the CEC line 42. The front microcomputer 32 controls the light receiving portion 35 for receiving remote control signal from the remote controller 36. In addition, even when the operation of the HOST CPU 31 is stopped because of a stand-by mode of the apparatus and the like, the front microcomputer 32 operates to maintain a state capable of transmitting/receiving a CEC message and receiving remote control signal.

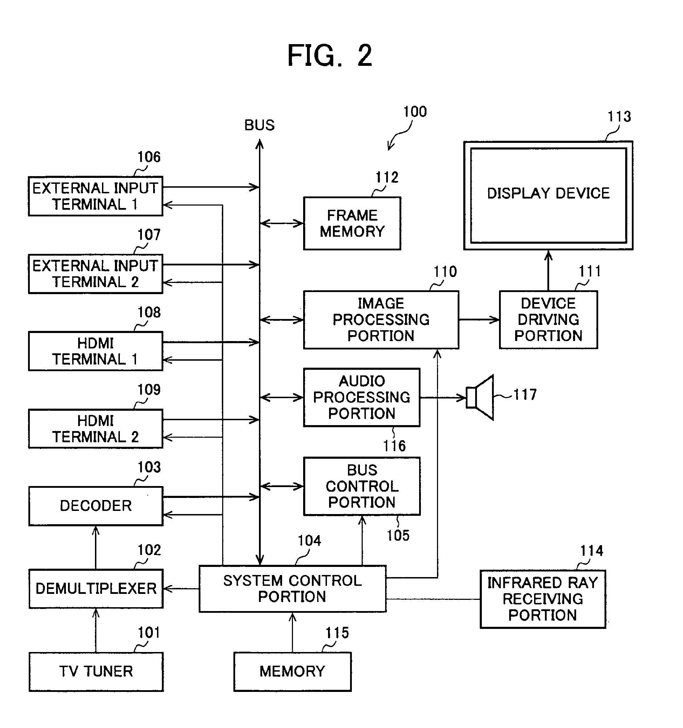

Fig. 2 is a block diagram showing a structural example of the display apparatus according to an embodiment of the present invention, and shows an example where the display apparatus of the present invention is applied to a television apparatus. In the figure, 100 denotes a television apparatus which has an HDMI CEC function similar to that of the sink device 30 shown in Fig. 1.
The television apparatus 100 includes a TV tuner 101 for selecting and demodulating television broadcast signal, a demultiplexer 102 for extracting EPG (registered trademark) data from demodulated broadcast signal and separating the demodulated data, and a decoder 103 for decoding video signals and audio signals of separated digital broadcast.

Moreover, the television apparatus 100 has a system control portion 104 for performing control of the entire system, and a bus control portion 105 for granting permission of using a bus in response to a request of using bus from the system control portion 104. When there is a request of using bus at one time, the bus control portion 105 promptly grants permission to use the bus, and when there are a plurality of requests, that is, when requests of using bus compete with each other, permission of using bus is granted according to priority previously determined in the system control portion 104 and the like.

The television apparatus 100 is provided with two external input terminals 106 and 107, and two HDMI terminals 108 and 109 (HDMI terminals 1 and 2). An input switching menu is prepared in order to switch the external input terminals 106 (and 107) and the HDMI terminals 108 (and 109), and is held in a memory 115. The memory 115 corresponds to a storage means of the present invention such as a nonvolatile memory, and stores a control program for operating the television apparatus 100 and various kinds of data. The external input terminals 106 and 107 are terminals for external input except for HDMI input, and are interfaces, for example, such as an video input terminal, IEEE 1394, and USB (registered trademark). The HDMI terminals 108 and 109 are connected to a plurality of external devices through an HDMI cable for performing transmission/reception of a CEC message to/from external devices by a CEC line as well as receiving video signal (including audio signal) from external devices by a TMDS line.

In an image processing portion 110, video signal converting processing such as noise reduction, scaling, and IP conversion, is appropriately performed as the occasion demands. In addition, image quality adjustment such as image quality emphasis correcting processing and γ correcting processing is appropriately performed. Moreover, in image signal converting processing, a frame memory 112 is used to perform various kinds of three-dimensional image processing. A device driving portion 111 controls driving of a display device 113 such as a liquid crystal panel to cause the display device 113 to display video signals output from the image processing portion 110. In addition, the television apparatus 100 is provided with an infrared ray receiving portion 114 for receiving infrared ray signal from a remote controller (not shown) operated by a user.

Further, audio signal decoded by the decoder 103 is processed at an audio processing portion 116 and this audio signal is supplied to a speaker 117 to reproduce sound.

The system control portion 104 includes the front microcomputer shown in Fig. 1 and the like, and controls input switching of the TV tuner 101, the external input terminals 106 and 107, and the HDMI terminals 108 and 109. In addition, the system control portion 104 performs analysis of a CEC message transmitted/received through the HDMI terminals 108 and 109 and control of operations based on analysis result.

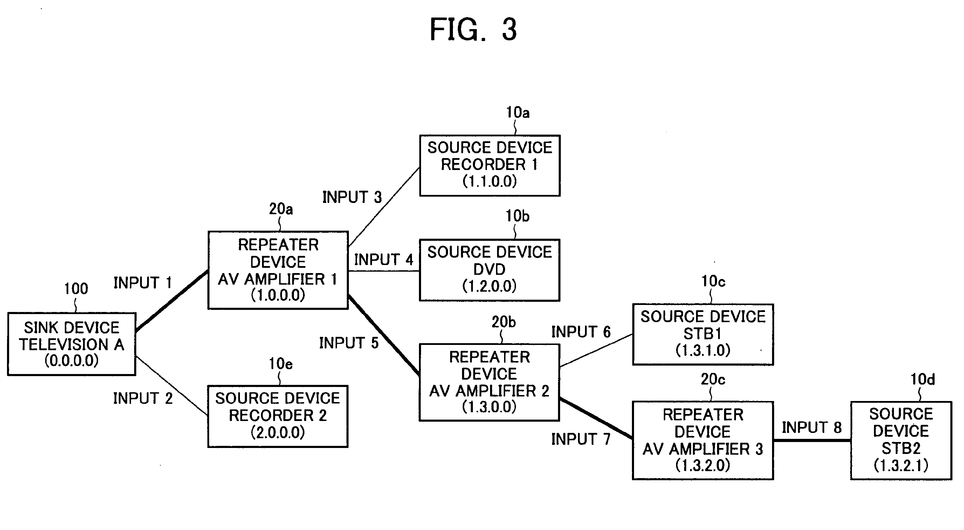

Fig. 3 is a view illustrating an example of a method for selecting an operation object device by the display system of the present invention. In this example, the television apparatus (TV) 100 as a sink device includes two HDMI inputs (input 1 and input 2), where one input 1 is connected to an AV amplifier 20a as a repeater device, and the other input 2 is connected to a recorder 10e as a source device. The TV 100 is assumed to have the same structure as the structure of the television apparatus shown in Fig. 2. Note that, numbers of (0.0.0.0), (1.0.0.0), ..., (2.0.0.0) assigned to respective devices are physical addresses showing connected positions of respective devices.

The AV amplifier 20a connected to the input 1 of the TV 100 includes three HDMI inputs (input 3, input 4, and input 5), where the input 3 is connected to a recorder 10a as a source device, the input 4 is connected to a DVD player 10b as a source device, and the input 5 is connected to an AV amplifier 20b as a repeater device.

The AV amplifier 20b connected to the input 5 of the AV amplifier 20a includes two HDMI inputs (input 6 and input 7), where the input 6 is connected to an STB 10c as a source device and the input 7 is connected to an AV amplifier 20c as a repeater device. Finally, the AV amplifier 20c connected to the input 7 of the AV amplifier 20b includes an HDMI input (input 8), where the input 8 is connected to an STB 10d as a source device.

As the preferred embodiment of the present invention, an example which two HDMI terminals are mounted to the TV 100 as a sink device is shown, but at least one HDMI terminal is necessarily provided and therefore the number of HDMI terminal is not limited to two. Further, the plurality of external devices connected to the HDMI terminal are also not limited to be connected like the connection structure of this example.

A main characteristic of the TV 100 is to transmit <Set Stream Path> to an input switching destination device when an input is switched by operation of a user and to select the device to which <Set Stream Path> was transmitted as a device for operation. This processing is executed by the system control portion 104 included in the TV 100. Note that, <Active Source> is one of CEC messages defined in the HDMI standard, which shows that the device is in an active state capable of outputting video.

In the connection structure shown in Fig. 3, a network is constructed by arranging a plurality of external devices hierarchically, that is, the TV 100 is at a first layer, the AV amplifier 20a and the recorder 10e are at a second layer, the recorder 10a, the DVD player 10b, and the AV amplifier 20b are at a third layer, the STB 10c and the AV amplifier 20c are at a fourth layer, and the STB 10d is at a fifth layer.

First, an input source is switched to a device connected to the AV amplifier 20a from a state where a user views video output from the recorder 10e connected to the input 2 of the TV 100. The user selects a menu of the TV 100 (an HDMI device selection) using an operation portion (not shown) of the TV 100 main body or a remote controller (not shown) attached to the TV 100 to specify the input 1 of the AV amplifier 20a as a switching destination. The TV 100 adds a physical address (1.0.0.0) of the AV amplifier 20a to a parameter by the system control portion 104 shown in Fig. 2 to transmit <Set Stream Path> by broadcast.

The AV amplifier 20a receives <Set Stream Path (1.0.0.0)> from the TV 100, and when there is a selected device at a next layer (herein, the AV amplifier 20b) among the inputs 3, 4, and 5, informs the TV 100 of the fact. The TV 100 receives the notification that the AV amplifier 20b is selected from the AV amplifier 20a and adds a physical address (1.3.0.0) of the AV amplifier 20b to a parameter and transmits <Set Stream Path> by broadcast.
Alternatively, when there is no device at a next layer selected by the AV amplifier 20a, regardless of the presence/absence of <Active Source> from the AV amplifier 20a, the TV 100 selects the AV amplifier 20a as a device for operation. However, since the AV amplifier is a repeater device, there is few case that the AV amplifier alone is connected, and the input side is connected to a source device such as a recorder and an STB or other repeater devices. Accordingly, without making the AV amplifier as a device for operation, a message to notify that a source device is not connected or a message to urge to switch to another input may be displayed by the TV.

Note that, there is also an HDMI device, such as a digital system VTR and a player having both functions of a repeater device and a source device. In a case where such an HDMI device (hereinafter, illustrated as a digital system VTR) is assigned to the physical address (1.3.0.0), when a device at a next layer is selected by the digital system VTR, the digital system VTR functions as a repeater device in the same manner as the above-mentioned AV amplifier does. Alternatively, when no device at a next layer is selected by the digital system VTR, it is possible to function the digital system VTR as a source device, the TV 100 may select the digital system VTR as a device for operation, regardless of the presence/absence of <Active Source> from the digital system VTR.

Here, which device is selected among devices connected to a next layer of the repeater device depends on the repeater device. In this example, the AV amplifier 20a as a repeater device selects the AV amplifier 20b of the input 5 and the AV amplifier 20b selects the AV amplifier 20c of the input 7. In addition, since the AV amplifier 20c is connected to only one STB 10d, the STB 10d serves as a selected device.

Note that, it is possible for a user to change a selected device by manual operation using a remote controller or the like, with respect to a repeater device such as the AV amplifier 20a. For example, when the user manually switches the input terminal of the AV amplifier 20a from the input 4 to the input 5 using an operation portion of the AV amplifier 20a main body or an attached remote controller, the AV amplifier 20a broadcasts a CEC message of <Routing Change (1.2.0.0) (1.3.0.0)> to show that the route of the input of its own is changed from the input 4 to the input 5. <Routing Change> is one of CEC messages defined in the HDMI standard for showing change of an input route. Upon receiving this, the TV 100 adds the physical address (1.3.0.0) of the AV amplifier 20b to a parameter and transmits <Set Stream Path> by broadcast to the AV amplifier 20b of the input 5 and decides the change of the input route.

As already described, the AV amplifier 20b receives <Set Stream Path (1.3.0.0)> from the TV 100, and notifies the TV 100 of the fact that there is a selected device at a next layer (herein, the AV amplifier 20c) among the inputs 6 and 7, if any. The TV 100 receives the notification that the AV amplifier 20c is selected from the AV amplifier 20b and adds a physical address (1.3.2.0) of the AV amplifier 20c to a parameter and transmits <Set Stream Path> by broadcast.

Next, the AV amplifier 20c receives <Set Stream Path (1.3.2.0)> from the TV 100, and notifies the TV 100 of the fact there is a selected device at a next layer (herein, the STB 10d), if any. The TV 100 receives that the STB 10d is selected from the AV amplifier 20c the notification and adds a physical address (1.3.2.1) of the STB 10d to a parameter and transmits <Set Stream Path> by broadcast.

The STB 10d receives <Set Stream Path (1.3.2.1)> from the TV 100. However, since the STB 10d is a source device, no device at a next layer is connected and does not notify the TV 100 of a selected device. As a result, regardless of the presence/absence of <Active Source> from the STB 10d, the TV 100 is able to select the STB 10d as a device for operation. In this way, since a device to which <Set Stream Path> has been transmitted, that is, a device whose physical address has been specified by <Set Stream Path> can serve as a device for operation, it is possible to perform an operation of a device unless a cable is removed, even when an input switching destination device is not in an active state because of not complying with optional prescriptions of the HDMI standard.

Furthermore, when physical address of each device is stored in the memory 115 shown in Fig. 2, the TV 100 may directly specify a physical address of a device connected to a repeater device such as the AV amplifier 20a to transmit <Set Stream Path>. For example, in order to switch an input source from the recorder 10e to the DVD player 10b, a user selects a menu of the TV 100 (selects an HDMI device) using an operation portion of the TV 100 main body or an attached remote controller and specifies the output of the DVD player 10b as a switching destination. The system control portion 104 of the TV 100 adds a physical address (1.2.0.0) of the DVD player 10b to a parameter and transmits <Set Stream Path> by broadcast.

In response to <Set Stream Path (1.2.0.0)> from the TV 100, the AV amplifier 20a automatically switches an input to the input 4 of the DVD player 10b. Then, when the DVD player 10b itself is in a stable state capable of outputting video (that is, in an active state), the DVD player 10b outputs an AV stream and further broadcasts <Active Source> indicative of being an active device. Alternatively, when the AV amplifier 20a is in a non-active state such as a stand-by state, the AV amplifier 20a does not return <Active Source>.
Regardless of the presence/absence of <Active Source> from the DVD player 10b, the TV 100 causes the DVD player 10b whose physical address has been specified by <Set Stream Path> to serve as a device for operation.

As shown in Fig. 3, in a case where a network is constructed such that the TV 100 as a sink device is arranged at a first layer, external devices such as a repeater device (AV amplifier 20a) and a source device (recorder 10e) that are directly connected to the TV 100 are arranged at a second layer, and, for third and subsequent layers, similarly, an external device directly connected to an external device at a certain layer is arranged at a next layer, the external device at the certain layer notifies the TV 100 of the fact that it selects the external device at the next layer, if it does, when it receives <Set Stream Path> transmitted by broadcast from the TV 100. The TV 100 having received the notification specifies a physical address of the external device at the next layer and transmits <Set Stream Path> by broadcast.

In the above, the TV 100 determines whether or not notification that the external device at the next layer is selected is given from the external device at the certain layer. When no notification is given, the external device at the certain layer is selected as a device for operation. In the example shown in Fig. 3, the STB 10d as a source device is selected as a device for operation. At this time, the TV 100 may store the physical address of the external device selected as a device for operation in the memory 115 shown in Fig. 2. In this case, when performing operation of the TV 100 next time, in response to input switching by a user, the physical address of the external device stored in the memory 115 is specified to transmit <Set Stream Path> by broadcast. Just by switching an input of the TV 100 to the input 1, it is possible for a user to transmit <Set Stream Path> that has specified the physical address of the STB 10d by broadcast to select the STB 10d as a device for operation even when the STB 10d is not an active device. Note that, a physical address of an external device stored in the memory 115 may be updated according to input switching of the TV 100 or an operation of an external device by a user. For example, only a physical address of an external device that is finally selected by a user as a device for operation may be stored, a plurality of physical addresses of external devices selected by a user as devices for operation may be stored, or a plurality of physical addresses of external devices that are more frequently selected by a user as devices for operation may be stored.

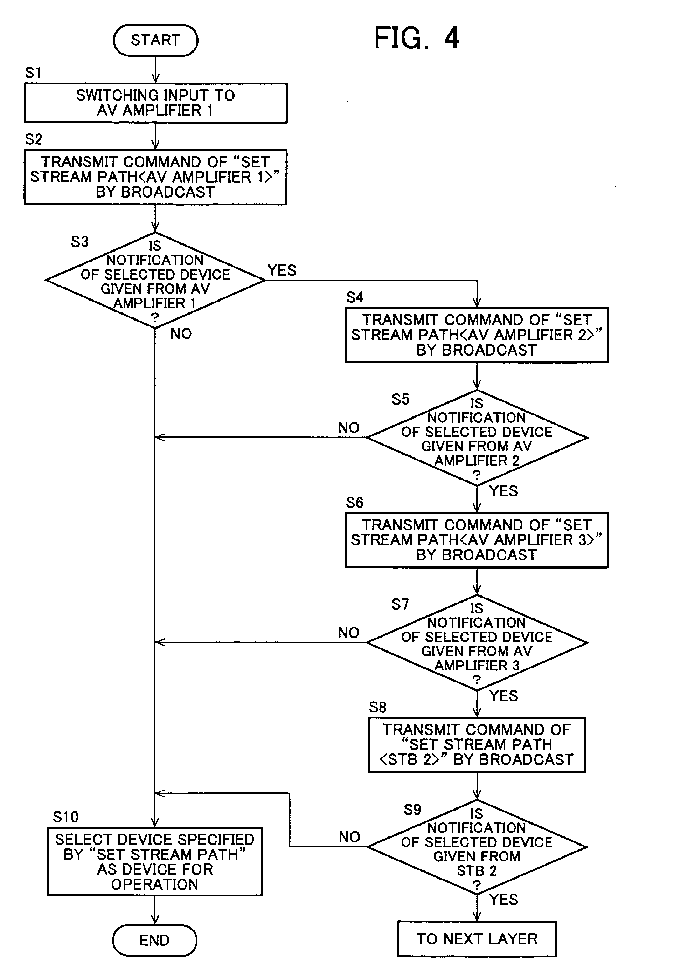

Fig. 4 is a flowchart illustrating an example of a method for selecting a device for operation by the display system of the present invention. In this example, description will be given based on the connection structure shown in Fig. 3. First, when an input is switched to the AV amplifier 1 according to an operation of a user (step S1), the TV 100 specifies a physical address of the AV amplifier 1 and transmits a command of "Set Stream Path <AV amplifier 1>" by broadcast (step S2). Note that, a physical address of a specified device is inserted in brackets, < >, of the command, and a physical address of (1.0.0.0) of the AV amplifier 1 is herein inserted.

Subsequently, the TV 100 determines whether or not notification of a selected device is given from the AV amplifier 1 (step S3). Note that, the TV 100 determines whether or not <Active Source> is returned from the AV amplifier 1 to <Set Stream Path> transmitted to the AV amplifier 1, and when <Active Source> is returned, recognizes the AV amplifier 1 as an active device. Every time <Set Stream Path> is transmitted, the TV 100 determines the presence/absence of the <Active Source>, but the description thereof will be omitted below.

When no notification of a selected device is given from the AV amplifier 1 at step S3 (in the case of NO), the TV 100 shifts the processing to step S10, and regardless of the presence/absence of <Active Source> from the AV amplifier 1, selects the AV amplifier 1 specified by the "Set Stream Path" as a device for operation. Note that, when no notification of a selected device is given, it may be determined that the AV amplifier 1 as a repeater device is not connected to a source device or other repeater devices and the AV amplifier 1 may not serve as a device for operation.
Alternatively, when notification of a selected device (herein, the AV amplifier 2) is given from the AV amplifier 1 at step S3 (in the case of YES), the TV 100 specifies a physical address of the AV amplifier 2 and transmits a command of "Set Stream Path <Av amplifier 2>" by broadcast (step S4).

Similarly, the TV 100 determines whether or not notification of a selected device is given from the AV amplifier 2 (step S5), and when no notification of a selected device is given from the AV amplifier 2 (in the case of NO), the TV 100 shifts the processing to step S10, and regardless of the presence/absence of <Active Source> from the AV amplifier 2, selects the AV amplifier 2 specified by the "Set Stream Path" as a device for operation. Alternatively, when notification of a selected device (herein, the AV amplifier 3) is given from the AV amplifier 2 at step S5 (in the case of YES), the TV 100 specifies a physical address of the AV amplifier 3 and transmits a command of "Set Stream Path <Av amplifier 3>" by broadcast (step S6).

Next, the TV 100 determines whether or not notification of a selected device is given from the AV amplifier 3 (step S7), and when no notification of a selected device is given from the AV amplifier 3 (in the case of NO), the TV 100 shifts the processing to step S10, and regardless of the presence/absence of <Active Source> from the AV amplifier 3, selects the AV amplifier 3 specified by "Set Stream Path" as a device for operation. Alternatively, when notification of a selected device (herein, the STB 2) is given from the AV amplifier 3 at step S7 (in the case of YES), the TV 100 specifies a physical address of the STB 2 and transmits a command of "Set Stream Path <STB 2>" by broadcast (step S8).

Next, the TV 100 determines whether or not notification of a selected device is given from the STB 2 (step S9), and when no notification of a selected device is given from the STB 2 (in the case of NO), the TV 100 shifts the processing to step S10, and regardless of the presence/absence of <Active Source> from the STB 2, selects the STB 2 specified by "Set Stream Path" as a device for operation. Alternatively, when notification of a selected device is given from the STB 2 at step S9 (in the case of YES), the TV 100 progresses to a next layer, and specifies a physical address of the selected device and transmits a command of "Set Stream Path" by broadcast.

In this example, since the STB 2 is a source device and there is no subsequent selected device, the STB 2 is selected as a device for operation. This is similar to other source devices (the recorder 1, the DVD player, the STB 1, and the recorder 2), and regardless of the presence/absence of <Active Source> from a source device, it is possible to select a source device specified by "Set Stream Path" as a device for operation.

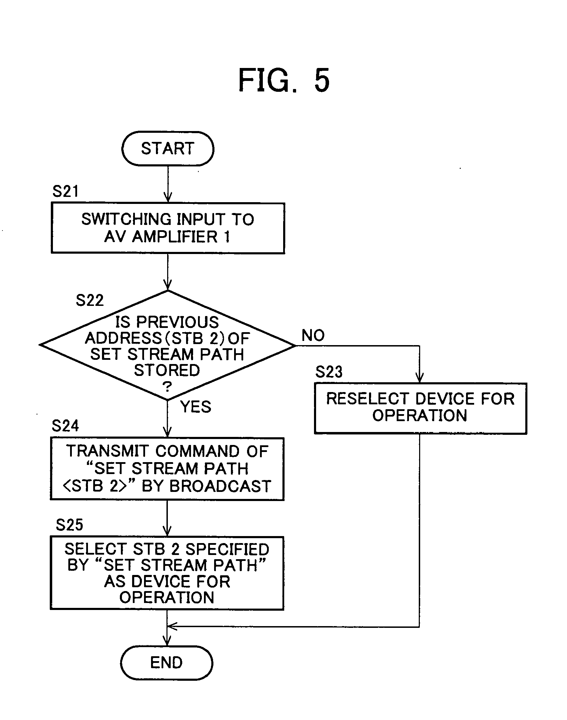

Fig. 5 is a flowchart illustrating another example of a method for selecting a device for operation by the display system of the present invention. In this example, description will be given based on the connection structure shown in Fig. 3. First, when an input is switched to the AV amplifier 1 according to an operation of a user (step S21), the TV 100 determines whether or not the previously transmitted physical address of <Set Stream Path> of the device for operation (herein, the STB 2) is stored in the memory 115 (step S22). When the physical address is not stored (in the case of NO), a device for operation is reselected (step S23).
Alternatively, at step S22, when the physical address is stored (in the case of YES), the physical address of the STB 2 is specified and a command of "Set Stream Path <STB 2>" is transmitted by broadcast (step S24).

Subsequently, the TV 100 selects the STB 2 specified by <Set Stream Path> as a device for operation (step S25) regardless of whether or not <Active Source> is returned from the STB 2 to <Set Stream Path> specifying the STB 2. In this way, when viewing the television, the previously transmitted physical address of <Set Stream Path> is stored and a device having the physical address is caused to serve as a device for operation, thus making it possible to perform operation smoothly.

As described above, according to the present invention, in a case where a CEC message is transmitted to an external device according to a user's operation to switch input, it is possible to select the device to which the CEC message has been transmitted as a device for operation even when the device is not in an active state, and therefore, just by switching an input, the user is able to easily select a device for operation. Furthermore, the user does not need to be particularly conscious of changing devices, and therefore it makes possible for the user to perform operation of a connected device smoothly.

## Claims

1. A display apparatus including an HDMI terminal connected to an external device, through which a plurality of external devices are connected to the display apparatus hierarchically in a tree structure,
wherein
when an instruction to switch input is given to any of the plurality of external devices through a user's operation to switch input, a CEC message for switching an input route to the external device to which the instruction to switch input has been given is transmitted, and
the external device to be a transmission destination of the CEC message is selected as a device for operation.

2. The display apparatus as defined in Claim 1, wherein
when a notification that the external device selects an external device at a next layer is given from the external device having received the CEC massage,
upon reception of the notification, the CEC message is transmitted to the external device at the next layer.

3. The display apparatus as defined in Claim 2, wherein
when the notification is not given from the external device having received the CEC massage, the external device having received the CEC massage is selected as a device for operation.

4. The display apparatus as defined in any one of Claims 1 through 3, comprising storage means for storing address information of the external device selected as a device for operation, wherein
when switching input next time, an address of the external device is specified to transmit the CEC message.

5. The display apparatus as defined in any one of Claims 1 through 4, wherein
the CEC message is <Set Stream Path> defined in the HDMI standard.

6. A display system, comprising:
the display apparatus as defined in any one of Claims 1 through 5; and
a plurality of external devices connected directly to or indirectly through an HDMI terminal of another external device to the HDMI terminal of the display apparatus.
